# EUROPEAN PATENT SPECIFICATION

(11) **EP 3 724 465 B1**
(45) Date of publication and mention of the grant of the patent: **07.06.2023**
(21) Application number: 18888400.1
(22) Date of filing: 13.12.2018
(51) Int. Cl.: F01M 1/08, F01M 1/16, F16N 25/02, F16N 7/38

(54) **A LARGE SLOW-RUNNING TWO-STROKE ENGINE AND A METHOD OF LUBRICATING IT AND A CONTROLLER FOR SUCH ENGINE AND METHOD**
GROSSER LANGSAM LAUFENDER ZWEITAKTMOTOR UND VERFAHREN ZU SEINER SCHMIERUNG UND REGLER FÜR EINEN SOLCHEN MOTOR UND VERFAHREN
GROS MOTEUR À DEUX TEMPS LENT, PROCÉDÉ DE LUBRIFICATION DE CELUI-CI, DISPOSITIF DE COMMANDE POUR UN TEL MOTEUR ET PROCÉDÉ

(30) Priority: 13.12.2017 DK PA201770935
(43) Date of publication of application: 21.10.2020
(73) Proprietor: Hans Jensen Lubricators A/S, 9560 Hadsund (DK)
(72) Inventor: BAK, Peer, 9300 Sæby (DK)
(74) Representative: Patrade A/S
(86) International application number: PCT/DK2018/050352
(87) International publication number: WO 2019/114902

(56) References cited:
- EP-A1- 1 951 995
- EP-A1- 2 044 300
- EP-A1- 2 196 639
- EP-A1- 2 545 258
- EP-A2- 1 586 751
- EP-A2- 2 722 500
- EP-A2- 2 722 500
- WO-A1-2007/057027
- WO-A1-2011/110181
- WO-A1-2011/116768
- WO-A1-2011/150943
- WO-A1-2016/015732
- DE-A1- 19 743 955

## Description

### FIELD OF THE INVENTION

The present invention relates to a controller for a large slow-running two-stroke engine as defined in the preamble of claim 1, a large slow-running two-stroke engine as defined in the preamble of claim 2 and a method of lubricating a large slow-running two-stroke engine as defined in the preamble of claim 10.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings. Examples of lubrication systems and components therefore are disclosed in WO2011/150943A1, WO2011/116768A1, and WO2007057027A1, EP2196639A1, WO2011/110181A1, WO2016015732A1, and EP2722500A2.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bars, which is substantially higher than the oil pressure of less than 10 bars that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

International patent application WO2011/110181 discusses the importance of precise lubricant dosing in a lubrication systems of marine engines. For the precise timing of the dosing, a double valve system is disclosed for separate control of opening and closing time of the lubricant injector, allowing the system to be adjusted to a short dosing period. However, precise adjustment of the dosing period is not sufficient for a precise dosing volume, as the dispensed volume is not only defined by the length of the time of dispensing but also depends on the pressure of the lubricant as well as on the viscosity, which, in turn, depends on the temperature. As an additional control measure, WO2011/110181 discloses a flow meter that is provided in the supply conduit between the lubricant supply and the injector nozzle and which measures the volume of lubricant flowing through the supply conduit during the dispensing of the lubricant through the nozzle.

However, despite these apparent advantages of SIP lubrication systems and advanced dosing systems for injectors in general, a steady motivation for improvements exists. Especially, due to increasingly strict requirements for reduction of oil consumption, improvements with respect to precise measurements of injection volumes are desired in excess of what has already been achieved with the system in WO2011/110181.

EP 2044300A1, EP 1951995A1 and DE 19743955A1 disclose features defined in the preambles of claims 1, 2 and 10.

However, none of these prior art documents disclose that the dosing chamber is connected to a lubricant refill conduit or that the flow meter is interposed between the refill conduit and the dosing chamber for measuring the mass and/or volume of the lubricant flowing from the refill conduit through the flow meter and into the dosing chamber in the accumulation phase.

### DESCRIPTION / SUMMARY OF THE INVENTION

It is therefore the objective of the invention to provide an improvement in the art. A particular objective is to provide a better flow control of lubricant injection by the injector. Especially, it is the objective to improve lubrication with SIP injectors in a large slow-running two-stroke engine. These objectives are achieved by a system in a large slow-running two-stroke engine and method as described in the following, as well as by a controller for the engine and method.

The large slow-running two-stroke engine comprises a cylinder with a reciprocal piston inside and with a plurality of injectors distributed along a perimeter of the cylinder for injection of lubricant into the cylinder at various positions on the perimeter during injection phases. For example, the large slow-running two-stroke engine is a marine engine or a large engine in power plants. Typically, the engine is burning diesel or gas fuel.

The engine further comprises a controller. The controller is configured for controlling the amount and timing of the lubricant injection by the injectors during an injection phase. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic connections are optionally wired or wireless or a combination thereof.

The term "injector" is used for an injection valve system comprising a housing with a lubricant inlet and one single injection nozzle with a nozzle aperture as a lubricant outlet and with a movable member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection cycle" is used for the time it takes to start an injection sequence and until the next injection sequence starts. For example, the injection sequence comprises a single injection, in which case the injection cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

In a practical embodiment, the housing comprises a base with a lubricant inlet port and comprises a flow chamber, typically a rigid cylindrical flow chamber, which rigidly connects the base with the nozzle. The flow chamber is hollow and, thus, allows lubricant to flow inside the flow chamber from the base to the nozzle. When the injector is mounted, the flow chamber extends through the cylinder wall of the engine so that the nozzle is held rigidly inside the cylinder by the flow chamber. Due to the base being provided at the opposite end of the flow chamber, it is typically located on or at the outer side of the cylinder wall. For example, the injector comprises a flange at the base for mounting onto the outer cylinder wall.

The term "flow meter" is used for a meter measuring mass and/or volume of the flow through the flow meter. The term "flow measurement" covers measurement of volume and/or mass.

In order to fully understand the invention, it is pointed out that a hitherto unrecognised problem has been discovered when using the system of WO2011/110181 for SIP injectors. Closer experimental analysis has revealed that SIP injectors, which are opened only a very short time in the order of some milliseconds, press lubricant back through the flow meter towards the lubricant supply during the closing of the injector, so that the flow meter does not measure the injected volume and/or mass in an injection cycle precisely, seeing that it is disposed serially in the supply conduit between the lubricant supply and the injector nozzle. Accordingly, the invention has the objective to solve this problem.

In contrast to the disclosure in WO2011/110181, the system and method of the invention explained herein uses a different way of measuring the volume and/or mass of the lubricant ejected through the nozzle of the injector, namely not during the dispensing of the lubricant by the injector, but, instead, the volume and/or mass is measured after the dispensing, in between injection phases.

In practice, the invention comprises a combination of a dosing unit and a flow meter, where the dosing unit is used for dispensing a predetermined amount of lubricant to the injectors, and the flow meter is used for subsequent verification that the injected amount in the preceding injection phase was correct.

In more detail, the dosing unit comprises a well-defined and predetermined lubricant volume in a dosing chamber that is filled with lubricant and from which during periodical lubricant cycles a portion is delivered from the dosing chamber through a chamber outlet to the injector or injectors for dispensing of it into the cylinder. After the dispensing of the portion of lubricant, the lubricant volume is refilled with lubricant for the next injection cycle and the amount of lubricant for the refilling is measured. As only lubricant from the lubricant volume of the dosing unit is used for dispensing by the injector, the amount of lubricant for the refilling thereof is identical to the portion dispensed by the injector in the preceding dispensing cycle. This portion is then measured after the injection by the flow meter between consecutive dispensing phases. Typically, the refilled amount is measured by the flow meter during the refilling of the dosing unit.

As the volume and/or mass of the dispensed portion is measured after the lubricant injection, any backflow of lubricant from the injector has already finished, once the measurement starts, why such backflow does not disturb the flow measurements. This way, the flow measurements are more precise and independent of pressure and viscosity, which is why such a system is an improvement over the system in WO2011/110181. It is especially an improvement when used for SIP injection.

In a practical embodiment, the dosing unit is provided according to a principle of a syringe with a plunger that is reciprocating for each injection cycle. The length of movement of the plunger determines the lubricant amount that is ejected from a dosing chamber in the dosing unit. The length of the plunger movement is determined by the speed and time by which the plunger is moved, however, delimited by the maximum stroke of the plunger. The speed and time of the plunger movement is determined by the pressure to which the plunger is exposed as well as the time that the plunger is moved. For example, the plunger is moved by high pressure oil which acts a certain time on the plunger. A system therefore is explained in detail below.

The system can, in principle, be used to supply lubricant to a single injector, but it will, typically, be used for a group of injectors, for example all injectors of a single cylinder in the engine. The latter is often called "common rail" hydraulic system. An example of a common rail system is disclosed in Danish patent DK176424 or, equivalently, German patent application DE19959300A1.

In concrete embodiments, the controller is connected by a feed conduit to at least one of the injectors for supplying lubricant for injection into the cylinder. Typically, the controller is connected to a plurality of injectors, for example all of the injectors of a single cylinder or to a subgroup of injectors, for example half of the injectors of a single cylinder. For example, the engine comprises a lubricant circuit with a supply conduit connected to the controller for providing lubricant to the controller from a lubricant supply and a return conduit connected to the controller for returning lubricant from the controller for recirculation in the lubricant circuit.

The dosing unit comprises a dosing chamber and a chamber outlet connecting the dosing chamber with the feed conduit, and the dosing unit is configured for cyclic operation between an injection phase and subsequent accumulation phase. The injection phase comprises dispensing lubricant from the dosing chamber of the dosing unit through the chamber outlet into the feed conduit and to the at least one injector. The subsequent accumulation phase comprises refilling of lubricant into the dosing chamber.

The controller further comprises a flow meter connected to the dosing chamber and configured for measuring the flow of the lubricant flowing into the dosing chamber for refilling of it in the accumulation phase between the injection phases. The flow meter provides a corresponding electronic flow-indicating signal as a measure for the injected volume and/or mass of lubricant of the preceding injection phase.

The electronic flow-indicating signal is typically fed into a computer, to which the controller is electronically connected or which is part of the controller, where the computer is configured for registering this flow (mass and/or volume) as a measure for the injected amount of lubricant of the directly preceding lubricant injection. For example, the computer is connected to a Human machine Interface (HMI) for displaying the signal for the injected volume and/or mass, optionally after sampling within a time range. Such HMI can also be useful for parameter and control adjustment.

In operational embodiments, the method comprises operating the dosing unit in a cyclic operation between an injection phase and a subsequent accumulation phase. In the injection phase, lubricant from the dosing chamber is dispensed through the chamber outlet and through the feed conduit to the at least one injector and the lubricant is dispensed from the injector into the cylinder. In the subsequent accumulation phase, lubricant is refilled into the dosing chamber and the mass and/or volume of the lubricant flowing into the dosing chamber is measured. In the accumulation phase and a corresponding electronic flow-indicating signal for the refilling is provided by the flow meter.

In some practical embodiments, the dosing chamber is connected to a lubricant refill conduit for refilling the dosing chamber with lubricant from the lubricant refill conduit in the accumulation phase. The flow meter is interposed between the refill conduit and the dosing chamber for measuring the mass and/or volume of the lubricant flowing from the return conduit through the flow meter and into the dosing chamber in the accumulation phase. For example, the flow meter is interposed between the refill conduit and the feed conduit for flow of lubricant from the refill conduit through the flow meter and through the feed conduit into the dosing chamber in the accumulation phase. Advantageously, in order to prevent backflow of lubricant from the feed conduit into the flow meter, a non-return valve is interposed between the flow meter and the feed conduit. Optionally, the chamber outlet has a two-way flow with a first flow of lubricant from the dosing chamber, through the chamber outlet into the feed conduit and through the feed conduit to the injector in the injection phase and with a second, flow of lubricant from the lubricant refill conduit through the flow meter, through part of the feed conduit, through the chamber outlet into the dosing chamber in the accumulation phase.

In the case of the controller comprising a return conduit for returning lubricant to the lubricant cycle of the engine, the refill conduit is advantageously connected to the return conduit.

In some embodiments, the dosing unit comprises a dosing inlet and a plunger between the dosing inlet and the chamber outlet, separating the dosing chamber from the dosing inlet. The plunger is arranged for displacement towards the chamber outlet upon pressure from lubricant flowing into the dosing inlet, the displacement causing a reduction of the volume in the dosing chamber. In operation, during the injection phase, the plunger is displaced towards the chamber outlet by providing pressure from lubricant flowing into the dosing inlet, causing a reduction of the volume of the dosing chamber by the displacement of the plunger and correspondingly expelling lubricant from the dosing chamber through the chamber outlet into the feed conduit in order to provide lubricant to the injector. After the injection phase, the plunger is returned in the opposite direction in the accumulation phase, which draws lubricant back into the dosing chamber for refilling, for example in reverse through the chamber outlet or through a separate refill inlet.

In practical embodiments, the controller comprises a first valve with an inlet port connected to a lubricant supply conduit and an outlet port connected to the dosing inlet. The first valve is configured to toggle between a first state in the injection phase in which the inlet port and the outlet port are connected for feeding high-pressure lubricant from the supply conduit through the inlet port and through the outlet port to the dosing inlet when the first valve is in the first state, and a second state in the accumulation phase in which the inlet port and the outlet port are disconnected for preventing lubricant from the supply conduit to reach the dosing inlet when the first valve is in the second state.

In the accumulation phase, the lubricant on the dosing inlet side of the plunger is drained to allow the plunger to return to its starting position. This can be done by using a separate valve or by constructing the first valve correspondingly. For example, the first valve also comprises a return port that is connected to the return conduit, and is configured for connecting the outlet port with the return port in the second state for draining lubricant from the dosing inlet into the return conduit when the plunger is displaced towards the dosing inlet in the accumulation phase.

In some embodiments, the injector comprises an inlet port in communication with the feed conduit and a pressure control port in communication with a pressure control conduit. Pressure difference between the lubricant inlet port and the pressure control port can then be used for controlling the lubricant injection, in particular in cases where the injector comprises a reciprocal valve body toggling between opening and closing the nozzle aperture by pressure changes between the lubricant inlet port and the pressure control port. For example, the reciprocal valve body, optionally a valve needle with a tip towards the nozzle aperture, is pre-stressed by a spring towards the nozzle aperture for closing the nozzle aperture when the valve body in idle state. High pressure at the inlet port in the injection phase is uses to displace the valve body away from the nozzle aperture against the force of the spring, which will open for lubricant injection into the cylinder.

For example, the injector comprises a feed volume in communication with the lubricant inlet port for receiving lubricant from the feed conduit. The nozzle aperture of the injector is in communication with the feed volume in order for the nozzle aperture, which is arranged inside the cylinder, to inject lubricant into the cylinder from the feed volume during the injection phase. The reciprocal valve body is provided with a first side communicating with the feed volume and an opposite side communicating with the pressure control port for controlling the position of the valve body in dependence of a pressure difference between the lubricant inlet port and the pressure control port. In this case, the pressure difference needs to be correspondingly higher than the force from the spring.

For example, in order to end the injection phase, a corresponding oil pressure or higher oil pressure at the pressure control port is then used to close the nozzle aperture again, using force from the spring. Alternatively, equally high pressure on both the inlet port and the pressure control port keeps the nozzle aperture closed until reduction of the pressure at the pressure control port, which would then result in the pressure at the inlet port to be highest, which, in turn, causes displacement of the valve body for opening the nozzle aperture for injection. Some concrete embodiments are explained in the following.

Optionally, the oil pressure at the pressure control port is provided by pressurized lubricant from the lubricant source of the engine. Alternatively, pressurized servo oil from a servo oil source different from the lubricant source of the engine is used for the pressure control in the injector.

In some embodiments, the controller comprises a second valve with an inlet port connected to the supply conduit and an outlet port connected to the pressure control conduit and a return port connected to the return conduit. The second valve is configured to toggle between a first state and a second state. Only in the first state, the inlet port and the outlet port are interconnected for feeding lubricant from the supply conduit to the pressure control port. In the second state, the outlet port and the return port are interconnected for draining lubricant from the pressure control port to the return conduit. As the pressure in the supply conduit is higher than the pressure in the return conduit, toggling between the first and the second state cyclically increases and decreases the pressure in the control pressure conduit and at the pressure control port.

In a first mode of operation, the dosing chamber is filled in an accumulation phase while the first valve and the second valve are both in the second state. Thus, there is low pressure on both the injector inlet and the control pressure inlet of the injector. Secondly, in the subsequent injection phase, the first valve is switched from the second state to the first state while the second valve is in the second state and, as a consequence, the first valve connects the supply conduit with the dosing inlet and the lubricant flowing from the supply conduit through the dosing inlet into the dosing unit causes displacement of the plunger in the dosing unit towards the chamber outlet and causes corresponding flow of lubricant from the dosing chamber through the chamber outlet and through the feed conduit through the inlet port of the injector, for example into the feed volume of the injector, and through the nozzle aperture into the cylinder. Subsequently, in order to end the injection phase, the second valve is switched from the second state to the first state and causes flow of lubricant from the supply conduit to the pressure control port of the injector and, as a consequence, stopping injection of lubricant into the cylinder.

For an injector with a valve body that is pre-stressed by a spring to close the nozzle aperture, the initial switch of the first valve into the first state provides high pressure lubricant at the inlet port whereas the pressure control port is still at a lower pressure, and the pressure difference displaces the valve body against the spring force and opens for lubricant injection into the cylinder. The subsequent switch of the second valve into the first state, equalizes the pressure between the inlet port and the pressure control port so that the spring can cause the valve body to again close the nozzle aperture. It is seen that the term "pressure control port" is justified, as the pressure at this port determines the opening and closing of the nozzle aperture.

Accordingly, in this embodiment, the control injector inlet port and injector control port are kept at low pressure until the injection phase is initiated by the injector inlet port switching from low pressure to high pressure, and the stop of the injection phase is cause by raising the pressure at the control port. In order to assist the spring in closing the nozzle aperture, a pressure intensifier is optionally inserted in the pressure control conduit in order to increase the pressure at the pressure control port relatively to the inlet port of the injector.

As an alternative, the switch of the second valve from the second state to the first state, which causes high pressure at the pressure control port of the injector, is done with a simultaneous switch of the first valve from the first to the second state, which creates instantly a lower pressure at the inlet port. The higher pressure at the control part as compared to the inlet port closes the nozzle by displacement of the valve body into a closing state. For embodiment, in which the valve body is pre-stressed by a spring, the spring force is assisted by the high pressure from the control port. Even for embodiments, in which the valve body is not pre-stressed, the switch of the pressure from high to low at the inlet port with the simultaneous shift of the pressure at the control port from low to high causes a displacement of the valve member to close the nozzle aperture.

In a different mode of operation, prior to the injection phase, the second valve is switched to the first state, causing high pressure at the pressure control port of the injector, assisting in keeping the nozzle aperture closed. Then, the first valve is switched to the first state, which still causes no injection, because the pressure at the injector inlet port and at the pressure control port are equal. Subsequently, for the injection phase, the second valve is switched from the first state to the second state while the first valve is still in the first state. The consequence is a pressure drop at the pressure control port relatively to the pressure at the injector inlet port. The higher pressure in the lubricant feed conduit and the injector inlet port at this stage as compared to the lower pressure in the return conduit and the control pressure port causes displacement of the plunger in the dosing unit towards the chamber outlet and flow of lubricant from the dosing chamber through the chamber outlet and through the feed conduit and through the inlet port of the injector into the feed volume at the nozzle and through the nozzle aperture into the cylinder.

For an injector with a valve body that is pre-stressed by a spring to close the nozzle aperture, the pressure drop at the pressure control port and the lubricant supply through the inlet port displaces the valve body against the spring force such that the nozzle aperture is opened. Subsequently, in order to end the injection phase, the first valve is switched from the first state to the second state, causing a drop in pressure at the injector inlet port and causing stop of flow of lubricant to the injector inlet port and, as a consequence, stopping injection of lubricant into the cylinder. In this embodiment, the injector inlet port and the injector control port are kept at high pressure until the injection phase, which is initiated by the control port switching from high pressure to low pressure, and the stop of the injection phase is caused by lowering the pressure at the inlet port.

As an alternative, the switch of the first valve from the first state to the second state, which stops flow of lubricant to the inlet port of the injector, is done simultaneously with a switch of the second valve from the second to the first state, which creates instantly a higher pressure at the control port than at the inlet port, which closes the nozzle by displacement of the valve body into a closing state. For embodiment, in which the valve body is pre-stressed by a spring, the spring force is assisted by the high pressure from the control port. For embodiments, in which the valve body is not pre-stressed, the switch of the pressure from high to low at the inlet port with the simultaneous shift of the pressure at the control port from low to high causes a displacement of the valve member to close the nozzle aperture.

Using two valves for regulating the pressure difference between the inlet port and the pressure control port is advantageous in that the timing between start and stop of injection can be controlled very precisely in the millisecond or even sub-millisecond range as compared to a single valve, for example magnetic valve, which has a much longer reaction time for a complete cycle of opening and closing.

In order to optimize precision of timing, especially the time length for injection, the feed conduit and the pressure control conduit are equally long or at least have lengths differing by less than 10%.

The controller can be provided as an add-on unit for the engine above. It would then be provided with respective conduit-connectors for connecting the controller to the lubricant pump and return conduit as well as the feed conduit to the injector or injectors. For the case of the injector comprising a pressure control port, the controller also is configured for connection to the pressure control conduit. In line with the above description, it comprises the cyclic operational dosing unit with the dosing chamber and the chamber outlet as well as the flow meter connected to the dosing chamber, which is measuring the flow (mass and/or volume) of the lubricant flowing into the dosing chamber in the accumulation phase. The flow meter is configured for providing a corresponding electronic flow-indicating signal as a measure for the injected mass and/or volume of lubricant of the preceding injection phase.

The controller as add-on unit or when installed in the engine has the capability of being provided with each single of the above described controller-related options or a selection or all of the options in combinations. These options, as also described in the patent claims for the engine and the related method.

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bars, typically between 25 bar and 100 bar for this high pressure injection. An example is an interval of between 30 and 80 bars, optionally between 35 and 60 bars.

The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bars at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
FIG. 1 is a sketch of part of a cylinder in an engine;
FIG. 2 is a drawing of an embodiment of the controller and injector;
FIG. 3 is a principle sketch of an example of an injector.

### DETAILED DESCRIPTION / PREFERRED EMBODIMENT

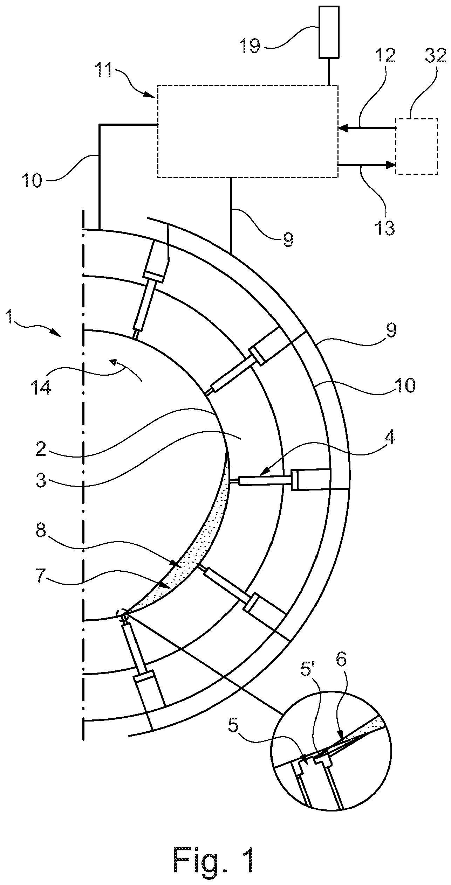

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted relatively to a neighbouring injector.

Each of the injectors 4 has a nozzle 5 with a nozzle aperture 5' from which a fine atomized spray 8 with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The injectors 4 receive lubrication oil from a controller 11 through a common feed conduit 9. Alternatively, the injectors 4 are arranged in groups where each group receives lubrication oil from the controller 11 through a common feed conduit 9 for each group. For example, there are two groups of injectors, optionally such that neighbouring injectors belong to different groups. As a further alternative, a controller is provided for each single injector 4.

In addition to the feed conduit 9, the injectors 4 are connected to the controller 11 by an oil pressure control conduit 10. The feed conduit 9 is used for opening the nozzle aperture 5' in the injector 4, which causes lubricant injection into the cylinder 1, and the pressure control conduit 10 provides oil pressure to regulate closing and opening of the nozzle aperture inside the injector 4. The oil pressure in the pressure control conduit 10 is provided by pressurised lubricant from a lubricant supply 32, for example from the lubricant circuit in the engine. Alternatively, the oil pressure in the pressure control conduit 10 is provided by pressurised servo oil obtained from a different pressurised oil source than the lubricant circuit. Typically, a reciprocal valve body, such as a valve needle, is provided inside the injector 4 for closing and opening the nozzle aperture 5'.

The controller 11 is connected to a supply conduit 12 for receiving lubricant from a lubricant supply 32, including an oil pump, and connected to a return conduit 13 for drain of lubricant from the controller 11, for example for return of lubricant to the lubricant supply 32, for example to the engine lubrication circuit with an oil reservoir for recirculation of oil. The lubricant pressure in the supply conduit 12 is higher than the pressure in the return conduit 13, for example at least two times higher. For example, the pressure in the supply conduit 12 is in the range of 25 to 100 bars, optionally 30 to 80 bars or even 50 to 80 bars, and the pressure in the return conduit is in the range of 5 to 15 bars, optionally in the range of 8 to 12 bars.

The controller 11 supplies lubrication oil to the injectors 4 in precisely timed pulses that are synchronized with the piston motion in the cylinder 1 of the engine. Typically, for the synchronization, the controller system 11 comprises a computer 19 or is electronically connected to a computer 19 that controls components in the controller 11 for the lubrication supply. Optionally, the computer monitors parameters for the actual state and motion of the engine, for example speed, load, and position of the crankshaft, the latter revealing the position of the pistons in the cylinders.

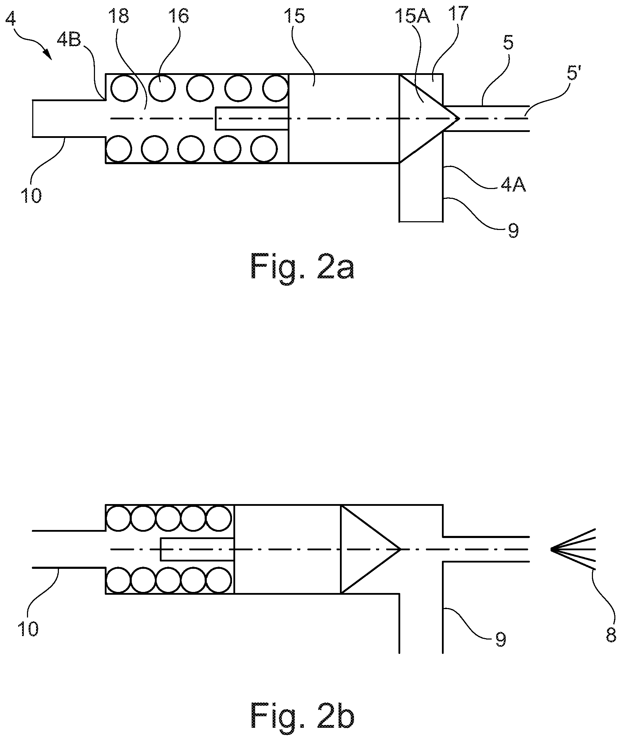

FIG. 2a and 2b illustrate a simplified principle sketch of such injector 4. The injector 4 comprises a valve with a reciprocal valve body 15 that is loaded by a spring 16 such that the tip 15A of the valve body 15 is pressed against a valve seat at the nozzle 5, thereby closing it. The feed conduit 9 is connected through injector inlet port 4A to a feed volume 17 at the tip 15A such that pressurised oil in the feed volume 17 presses the valve body 15 away from the nozzle 5 against the pressure from the spring 14.

While the valve body 15 is pressed away from the nozzle 5, as illustrated in FIG 2b, pressurised lubricant from the feed conduit 9 is ejected through the nozzle aperture 5', for example as an atomized spray, as illustrated in FIG. 2b, although a compact jet is also possible, depending on the pressure and viscosity of the lubricant and the nozzle configuration. When the pressure difference between the feed volume 17 and the pressure control volume 18 is smaller than the force from the spring 14 on the valve body 15, the nozzle aperture 5' is closed by the spring pushing the valve body 15 with the tip 15A against the valve seat at the nozzle aperture 5'.

It is pointed out that valve body 15 with a tip 15A against a nozzle aperture 5' is an example only. Alternatively, a different mechanism for closure of the nozzle aperture 5' is used, for example a cylindrical body closing a nozzle aperture in a tubular channel, such as disclosed in WO2014/04838.

In principle, opening and closing of the nozzle aperture 5' can be caused by first increasing the pressure in excess of the pressure from the spring 16 and then, at the end of the injection phase, reducing the pressure in the feed conduit 9 again such that the pressure from the spring 16 gets larger than the pressure in the feed volume 17.

However, an even more precise feeding time is obtained by raising the pressure in the pressure control volume 18 on the back side of the valve body 15, which is accomplished by toggling the pressure cyclically between the inlet port 4A and the pressure control port 4B. An example is disclosed in WO2011/110181.

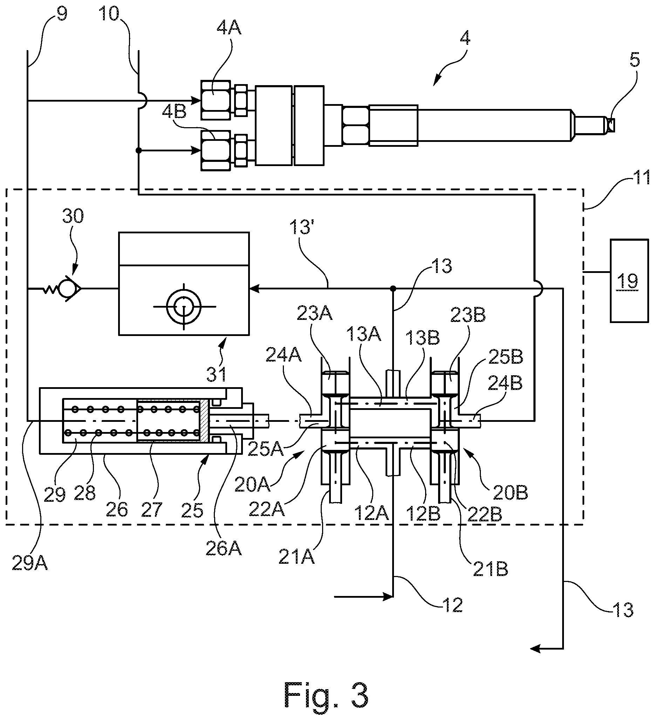

The length of the injection phase determines the lubricant mass and volume that is injected. However, an improved principle for flow control is illustrated in FIG. 3.

FIG. 3 illustrates an embodiment of the controller 11. The controller comprises a double valve system with a first valve 20A and a second valve 20B, each being provided with an intake port 12A, 12B, connected to supply conduit 12 for receiving lubricant at high pressure, as described above, and with a return port 13A, 13B connected to return conduit 13, in which the lubricant has a lower pressure, for example at least two times lower than the pressure in the supply conduit 12.

The first valve 20A has an outlet port 24A that is connected to a dosing unit 25, and the second valve 20B has an outlet port 24B that is connected to a pressure control conduit 10, which will be explained in greater detail below.

Each of the first and second valve 20A, 20B comprises a valve member 21A, 21B with a first closure member 22A, 22B and a second closure member 23A, 23B, between which a valve chamber 25A and 25B is provided.

The valve member 21A, 21B is reciprocal between a first position in a first state, in which the valve chamber 25A, 25B communicates with the respective intake port 12A, 12B and the outlet port 24A, 24B, and a second position in a second state, where the valve chamber 25A, 25B communicates with the outlet port 24A, 24B and the return port 13A, 13B, the latter position being illustrated in FIG. 3 for both valves 20A, 20B. For example, the movement of the valve members 21A, 21B between the first and second position is caused by magnetic force provided by an electromagnet.

The outlet port 24A of the first valve 20A is connected to a dosing unit 26, which supplies a certain predetermined mass and/or volume of lubricant to the feed conduit 9 when the dosing unit 26 is activated. In the present embodiment, the dosing unit 26 is provided with a dosing inlet 26A and a chamber outlet 29A, mutually separated by a plunger 27 that is loaded by a helical spring 28 with a force against the dosing inlet 26A. A chamber 29 is provided between the plunger 27 and the chamber outlet 29A, and the volume of the chamber 29 is reduced when the plunger 27 is moved towards the chamber outlet 29A. The length of the movement of the plunger depends on the speed with which the plunger 27 is moved and the time in which the intake port 12A is connected to the outlet port. Due to the plunger 27, the dosing unit 25 is a pressure separator, separating the lubricant from the supply conduit 12 and the lubricant in the feed conduit 9.

The computer 19 is functionally connected to the valve system 20A, 20B and electronically the flow meter 31 in the controller 11. Optionally, the computer is also electronically connected to sensors in the engine in order to monitor parameters for the actual state and motion of the engine, as already mentioned above. In the case that multiple controllers 11 are used for the engine, or even multiple controllers 11 for each cylinder, the controllers 11 would, typically, share a single computer 19.

A lubrication cycle is explained in the following.

While the valve member 21B of the second valve 20B is in its second position in a second state of the second valve 20B, closing off the intake port 12B of the second valve 20B, as indicated in FIG. 3, the valve member 21A of the first valve 20A is moved from the second position, as illustrated in FIG. 3, to the first position, in which the valve chamber 25A of the first valve 20A communicates with the respective intake port 12A and the outlet port 24A. The pressurised lubricant from the lubricant supply conduit 12 flows through the intake port 12A, through the valve chamber 25A and through the outlet port 24A of the first valve 20A and from the outlet port 24A to the dosing inlet 26A, thereby moving plunger 27 towards the chamber outlet 29A against the load of the spring 28. The volume of the chamber 29 is reduced and lubricant in the chamber 29 is expelled through the chamber outlet 29A into feed conduit 9 and further through inlet port 4A into injector 4 and ejected through the nozzle aperture 5' into the cylinder 1 of the engine.

A first option for ending the injection phase is a return the first valve 20A to the second state, while the second valve 20B remains in the second state. The reduced pressure at the inlet port 4A causes the spring to close the nozzle aperture 5'.

A second option for ending the injection phase is provided by, subsequently, while the first valve 20A is still in the first state and pressurising the inlet port of the injector, switching the second valve 20B from the second state to the first state, where the valve member 21B of the second valve 20B is shifted from the second position, which is illustrated in FIG. 3, to the first position where the valve chamber 29B of the second valve 20B connects the respective intake port 12B with the outlet port 24B, thereby connecting the pressure control conduit 10 to the high pressure lubricant from supply conduit 12. This connection results in a pressure equalisation at both ports 4A, 4B of the injector 4, and the spring force on the valve body 15 inside the injector 4 causes closure of the nozzle aperture 5' and stop of the lubricant ejection from the injector 4. Accordingly, in this above mode of operation, the control injector inlet port 4a and injector control port 4B are kept at low pressure until the injection phase is initiated by the injector inlet port 4A switching from low pressure to high pressure, and the end of the injection phase is caused by raising the pressure at the control port 4B.

Optionally, in order to assist the spring 16 and accelerate this closing procedure, the pressure in the pressure control conduit 10 is increased to a pressure level above the pressure in the feed conduit 9. This can be accomplished in practice by inserting a hydraulic pressure increasing device, for example a hydraulic pressure intensifier, in the pressure control conduit 10.

As an alternative, the switch of the second valve 20B from the second state to the first state, which causes high pressure at the pressure control port 4B of the injector 4, is done simultaneously with a switch of the first valve 20A from the first to the second state, which creates instantly a lower pressure at the inlet port 4. The higher pressure at the control part 4B as compared to the inlet port 4A closes the nozzle 5 by displacement of the valve body 15 into a closing state.

After ending the injection phase, the second valve 20B returns to the second position for the accumulation phase.

An advantage of these operation methods for ending the injection phase, as described above, is the fact that the injector 4 is pressurised to the high pressure level from the lubricant supply conduit 12 only during injection phase and not in the idle period of the accumulation phase, which minimizes the risk for loss of lubricant by leak.

In a further alternative mode, the second valve 20B is switched to the first state prior to the injection phase, causing high pressure at the pressure control port 4B of the injector 4, assisting in keeping the nozzle aperture 5' closed. Then, the first valve 20A is switched to the first state, which still causes no injection, because the pressure at the injector inlet port 4A and at the pressure control port 4B are equal. Subsequently, for the injection phase, the second valve 20B is switched from the first state to the second state while the first valve 20A is still in the first state. The consequence is a pressure drop at the pressure control port 4B relatively to the pressure at the injector inlet port 4A. The higher pressure in the lubricant feed conduit 9 and the injector inlet port 4A at this stage, as compared to the lower pressure in the return conduit 13 and the control pressure port 4B, causes displacement of the plunger 27 in the dosing unit 26 towards the chamber outlet 29A and flow of lubricant from the dosing chamber 29 through the chamber outlet 29A and through the feed conduit 9 and through the inlet port 4A of the injector 4 and further through the nozzle aperture into the cylinder 1.

For an injector with a valve body 15 that is pre-stressed by a spring 16 to close the nozzle aperture 5', the pressure drop at the pressure control port 4a and the lubricant supply through the inlet port 4a displaces the valve body 15 against the spring force such that the nozzle aperture 5' is opened. Subsequently, in order to end the injection phase, the first valve 20A is switched from the first state to the second state, causing a drop in pressure at the injector inlet port 4A and causing stop of flow of lubricant to the injector inlet port 4A and, as a consequence, stopping injection of lubricant into the cylinder 1. In this embodiment, the injector inlet port 4A and the injector control port 4B are kept at high pressure until the injection phase, which is initiated by the control port 4B switching from high pressure to low pressure, and the stop of the injection phase is caused by lowering the pressure at the inlet port 4A.

As an alternative, the switch of the first valve 20A from the first state to the second state, which stops flow of lubricant to the inlet port 4A of the injector 4, is done simultaneously with a switch of the second valve 4B from the second to the first state, which creates instantly a higher pressure at the control port 4B than at the inlet port 4A, which closes the nozzle 5 by displacement of the valve body 15 into a closing state. For embodiment, in which the valve body 15 is pre-stressed by a spring 16, the spring force 16 is assisted by the high pressure from the control port 4B. For embodiments, in which the valve body 15 is not pre-stressed, the switch of the pressure from high to low at the inlet port 4A with the simultaneous shift of the pressure at the control port 4B from low to high causes a displacement of the valve member 15 to close the nozzle aperture 5.

As it appears from the various embodiments above, a double valve system as disclosed with the first valve 20A and the second valve 20B gives a high degree of flexibility for various modes of operation. This is useful when using the controller for different types of injectors 4, with or without a spring and with various displacement mechanisms.

When the injection phase with ejection of lubricant through the nozzle aperture 5' has finished, the accumulation phase starts, in which the valve member 21A of the first valve 20A is returned to the second position, as illustrated in FIG. 3, such that the valve chamber 25A connects the outlet port 24A with the return port 13A of the first valve 20A.

The mass and volume that is expelled from the dosing chamber 29 depends on the time lapse between the instance where the first valve 20A switches from low pressure at the second position to high pressure at the first position and the instance where the second valve 20B switches from low to high pressure. Apart from general parameters, such as the pressure, nozzle aperture, and the viscosity of the lubricant, it further depends on the speed with which the spring 16 in the injector 4 is able to push the valve member 15 back into closing position.

The pressure reduction at the dosing inlet 26A causes the spring 28 to push the plunger 27 back to its original position, which is a state that is illustrated in FIG. 3. However, return of the plunger 27 is only possible if the lubricant in chamber 29 is replenished. This replenishment is done through a one way check valve 30 and a flow meter 31, which are serially connected to refill conduit 13', which is exemplified as being connected to return conduit 13, although the refilling could also be done from a different lubricant source. The flow meter 31 measures the flow (mass and/or volume) of the lubricant that is replenished into the chamber 29 in the accumulation phase and provides an electronic flow-indicating signal that is a measure for the injected mass and/or volume of lubricant of the preceding injection phase. This mass and/or volume corresponds to the mass and/or volume that has been expelled in the previous injection phase through the injector 4 or group of injectors 4 connected to feed conduit 9.

As the flow (mass and/or volume) is measured by the flow meter 31 after the lubricant ejection by the injector 4, any uncertainty in the flow measurement due to backflow from the injector is eliminated. The measured flow corresponds exactly to the ejected mass and/or volume of lubricant in the preceding injection phase, apart from a minute difference due to volume change of the oil in the conduits caused by pressure change from the injection pressure, typically in the range of 30 to 100 bars, and the later, lower refill pressure.

Typically, the valves 20A, 20B are magnetic valves in which opening and closing is achieved by moving a valve member 21A, 21B by electromagnetic force. However, such magnets have a relatively long reaction time, for example in the range of 10 to 20 milliseconds, which is why a double valve system is preferred. For identical first and second valves 20A, 20B, the reaction time is the same, and the injection time is given by the differential time lag between activation of the first valve 20A and the second valve 20B, eliminating the reaction time.

In some embodiments, the feed conduit 9 including the dosing unit 26 has the same length from the valves 20A, 20B to the injector 4 as the pressure control conduit 10. This minimized time lags for high pressure building up at the respective two ports 4A, 4B of the injector, further minimizing uncertainty with respect to correct opening periods for injecting lubricant into the cylinder of the engine. In this connection, it is pointed out that the injection phases are in the order of 10 milliseconds or less, potentially down to injection phases of less than 1 millisecond, why uncertainties in the order of one millisecond or a few milliseconds can have substantial influence on the success of the lubrication. This is why even small uncertainties are important to eliminate or at least minimize.

### Numbering

1 cylinder
2 cylinder liner
3 cylinder wall
4 oil injector
4A inlet port of oil injector 4
4B pressure control port of oil injector 4
5 nozzle
5' nozzle aperture
6 cut-out in liner
7 atomised spray from a single injector 4
8 swirling spray
9 lubricant feed conduit
10 pressure control conduit
11 controller
12 lubricant supply conduit
12A, 12B intake port of first and second valve 20A, 20B, respectively
13 return conduit
13A, 13B return port of first and second valve 20A, 20B, respectively
13' lubricant refill conduit
14 swirl in cylinder
15 valve body
15A tip of valve body 15
16 spring acting on valve body 15 inside injector 4
17 feed volume at tip 15A of valve body 15
18 pressure control volume on backside of valve body 15
19 computer electronically connected to controller 11
20A, 20B first and second valve, respectively
21A, 21B valve member of first and second valve 20A, 20B, respectively
22A, 22B first closure member of first and second valve 20A, 20B, respectively
23A, 23B second closure member of first and second valve 20A, 20B, respectively
24A, 24B outlet port of first and second valve 20A, 20B, respectively
25A, 25B valve chamber of first and second valve 20A, 20B, respectively
26 lubricant dosing unit
26A inlet of dosing unit 26
27 plunger in dosing unit 26
28 spring acting against plunger 27
29 lubricant dosing chamber in dosing unit 26
29A chamber outlet of dosing chamber 29
30 one way check valve
31 lubricant flow meter
32 lubricant supply

## Claims

1. A controller (11) which is configured for controlling the amount and timing of the lubricant injection by at least one injector (4) which is arranged in a cylinder (1) of a large slow-running two-stroke engine with a reciprocal piston inside and with a plurality of injectors (4); the controller (11) being configured for connection by a feed conduit (9) to at least one of the injectors (4) for supplying lubricant from the controller (11) to the injector (4) for injection of the lubricant by the injector (4) into the cylinder (1); wherein the controller (11) comprises a dosing unit (26), the dosing unit (26) comprising a dosing chamber (29) and a chamber outlet (29A) configured for connection to the feed conduit (9), and whereon the dosing unit (26) is configured for cyclic operation between an accumulation phase and a subsequent injection phase, wherein the accumulation phase comprises accumulation of lubricant in the dosing chamber (29), and the subsequent injection phase comprises dispensing the accumulated lubricant from the dosing chamber (29) through the chamber outlet (29A) to the at least one injectors (4); the controller (11) further comprising a flow meter (31) connected to the dosing chamber (29) and configured for measuring the mass and/or volume of the lubricant flowing into the dosing chamber (29) in the accumulation phase, and wherein the controller (11) is configured for providing a corresponding flow-indicating signal from the flow meter (31), the flow-indicating signal being a measure for the injected mass and/or volume of lubricant of the preceding injection phase, **characterised in that** the flow meter (31) comprises an upstream connection to a lubricant refill conduit (13') for refilling the dosing chamber (29) through the flow meter (31) with lubricant from the lubricant refill conduit (13') in the accumulation phase, wherein the dosing chamber (29) has a downstream connection to a non-return valve (30) for preventing flow in reverse through the flow meter (31).

2. A large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter; the engine further comprising a controller (11) that is configured for controlling the amount and timing of the lubricant injection by at least one of the injectors (4); the controller (11) being connected by a feed conduit (9) to at least one of the injectors (4) for supplying lubricant for injection into the cylinder (1); **characterised in that** the controller (11) is a controller according to claim 1.

3. A large slow-running two-stroke engine according to claim 2, wherein the flow meter (31) is interposed between the lubricant refill conduit (13') and the feed conduit (9) for flow of lubricant from the refill conduit (13') through the flow meter (31) and through the feed conduit (9) into the dosing chamber (29) in the accumulation phase.

4. A large slow-running two-stroke engine according to claim 3, wherein a non-return valve (30) is interposed between the flow meter (31) and the feed conduit (9) for preventing backflow of lubricant from the feed conduit (9) into the flow meter (31).

5. A large slow-running two-stroke engine according to any preceding claim 2-4, wherein the dosing unit (26) comprises a dosing inlet (26A) and a plunger (27) between the dosing inlet (26A) and the chamber outlet (29A), the plunger (27) being arranged for displacement towards the chamber outlet (29A) upon pressure from lubricant flowing into the dosing inlet (26A), the displacement causing a reduction of the volume in dosing chamber (29) and corresponding expelling of lubricant from the dosing chamber (29) through the chamber outlet (29A) into the feed conduit (9).

6. A large slow-running two-stroke engine according to claim 5, wherein the controller (11) comprises a first valve (20A) with an intake port (12A) connected to a lubricant supply conduit (12) and an outlet port (24A) connected to the dosing inlet (26A), the first valve (20A) being configured to toggle between a first state in the injection phase in which the intake port (12A) and the outlet port (24A) are connected for feeding lubricant from the supply conduit (12) through the intake port (12A) and through the outlet port (24A) to the dosing inlet (26A) when the first valve (20A) is in the first state for supplying the lubricant from the supply conduit (12) to the dosing unit (26), and a second state in the accumulation phase in which the inlet port (21A) and the outlet port (24A) are disconnected for preventing lubricant from the supply conduit (12) to reach the dosing inlet (26A) when the first valve (20A) is in the second state.

7. A large slow running two stroke engine according to claim 6, wherein the first valve (20A) also comprises a return port (13A) connected to a lubricant return conduit (13), wherein the first valve (20A) is configured for connecting the outlet port (24A) with the return port (13A) in the second state for draining lubricant from the dosing inlet (26A) into the return conduit (13) when the plunger (27) is displaced towards the dosing inlet (26A) in the accumulation phase.

8. A large slow running two stroke engine according to claim 6 or 7, wherein the lubricant refill conduit (13') is connected to the return line (13) for receiving lubricant from the return line (13) for refilling the dosing chamber (29) in the accumulation phase, wherein the pressure of the lubricant in the return line (13) is lower than the pressure of the lubricant in the supply line (12).

9. A large slow-running two-stroke engine according to any preceding claim 2-8, wherein the injector (4) comprises an injector inlet port (4A) in communication with the feed conduit (9) and a pressure control port (4B) in communication with a pressure control conduit (10); wherein the injector (4) comprises a feed volume (17) in communication with the injector inlet port (4A) for receiving lubricant from the feed conduit (9); wherein the injector comprises a nozzle (5) with a nozzle aperture (5') in communication with the feed volume (17), the nozzle aperture (5') being arranged inside the cylinder (1) for injection of lubricant into the cylinder (1) from the feed volume (17) through the nozzle aperture (5'); wherein the injector (4) comprises a reciprocal valve body (15) with a first side communicating with the feed volume (17) and an opposite side communicating with the pressure control port (4B) for controlling the position of the valve body (15) in dependence of a pressure difference between the injector inlet port (4A) and the pressure control port (4B); the valve body (15) being arranged for toggling between opening and closing the nozzle aperture (5') by pressure changes between the injector inlet port (4A) and the pressure control port (4B)

10. A method for lubricating a large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter; the engine further comprising a controller (11) that is configured for controlling the amount and timing of the lubricant injection by at least one of the injectors (4); the controller (11) being connected by a feed conduit (9) to at least one of the injectors (4) for supplying lubricant for injection into the cylinder (1); wherein the controller (11) comprises a dosing unit (26), the dosing unit (26) comprising a dosing chamber (29) and a chamber outlet (29A) connecting the dosing chamber (29) with the feed conduit (9); the controller (11) further comprising a flow meter (31) connected to the dosing chamber (29) and configured for measuring the mass and/or volume of the lubricant flowing into the dosing chamber (29); and wherein the method comprises operating the dosing unit (26) in a cyclic operation between an injection phase and a subsequent accumulation phase; in the injection phase dispensing the lubricant from the dosing chamber (29) through the chamber outlet (29A) and through the feed conduit (9) to the at least one of the injectors (4) and injecting the lubricant from the at least one of the injectors (4) into the cylinder (1); in the subsequent accumulation phase refilling lubricant into the dosing chamber (29) and, by the flow meter (31), measuring the mass and/or volume of the lubricant flowing into the dosing chamber (29) for the refilling; wherein the method further comprises providing a corresponding electronic flow-indicating signal by the flow meter (31) as a measure for the injected mass and/or volume of lubricant of the preceding injection phase, **characterised in that** the dosing chamber (29) is connected to a lubricant refill conduit (13') for refilling the dosing chamber (29) with lubricant from the lubricant refill conduit (13') in the accumulation phase, wherein the flow meter (31) is interposed between the refill conduit (13') and the dosing chamber (29); and the method comprises, by the flow meter (31), measuring the mass and/or volume of the lubricant flowing from the refill conduit (13') through the flow meter (31) and into the dosing chamber (29) in the accumulation phase.

11. A method according to claim 10, wherein the dosing unit (26) comprises a dosing inlet (26A) and a plunger (27) between the dosing inlet (26A) and the chamber outlet (29A); wherein the method comprises displacing the plunger (27) towards the chamber outlet (29A) by providing pressure from lubricant flowing into the dosing inlet (26A) and causing a reduction of the volume of the dosing chamber (29) by the displacement of the plunger (27) and correspondingly expelling lubricant from the dosing chamber (29) through the chamber outlet (29A) into the feed conduit (9) and into the injector (4), wherein the injector (4) comprises an injector inlet port (4A) in communication with the feed conduit (9) and a pressure control port (4B) in communication with a pressure control conduit (10); wherein the injector (4) comprises a feed volume (17) in communication with the injector inlet port (4A) for receiving lubricant from the feed conduit (9); wherein the injector comprises a nozzle (5) with a nozzle aperture (5') in communication with the feed volume (17), the nozzle aperture (5') being arranged inside the cylinder (1) for injection of lubricant into the cylinder (1) from the feed volume (17) through the nozzle aperture (5'); wherein the injector (4) comprises a reciprocal valve body (15) with a first side communicating with the feed volume (17) and an opposite side communicating with the pressure control port (4B) for controlling the position of the valve body (15) in dependence of the pressure difference between the injector inlet port (4A) and the pressure control port (4B); the valve body (15) being arranged for toggling between opening and closing the nozzle aperture (5'); and the method comprising cyclic changing the pressure difference between the injector inlet port (4A) and the pressure control port (4B) and thereby causing toggling the valve body (15) between an injection state where lubricant is injected into the cylinder (1) and a closing state where no lubricant is injected.

12. A method according to claim 11, wherein the controller (11) comprises a first valve (20A) with an intake port (12A) connected to a lubricant supply conduit (12) and an outlet port (24A) connected to the dosing inlet (26A) and a return port (13A) connected to a lubricant return conduit (13); the first valve (20A) being configured to toggle between a first state in which the intake port (12A) and the outlet port (24A) are interconnected for feeding lubricant from the supply conduit (12) through the intake port (12A) and through the outlet port (24A) to the dosing inlet (26A) and a second state in which the intake port (12A) and the outlet port (24A) are disconnected from each other and the outlet port (24A) and the return port (13A) are interconnected for draining lubricant from the dosing inlet (26A) through the first valve (20A) into the return conduit (13); wherein the controller (11) comprises a second valve (20B) with an intake port (12B) connected to the supply conduit (9) and an outlet port (24B) connected to the pressure control conduit (10) and a return port (13B) connected to the return conduit (13); the second valve (20B) being configured to toggle between a first state in which the intake port (12B) and the outlet port (24B) are interconnected for feeding lubricant from the supply conduit (12) to the pressure control port (4B) and a second state in which the outlet port (24B) and the return port (13B) are interconnected for draining lubricant from the pressure control port (4B) to the return conduit (13); wherein the method comprises cyclic performance of either A) or B), wherein
A) comprises firstly filling the dosing chamber (29) in an accumulation phase while the first valve (20A) and the second valve (20B) are both in the second state; and subsequently for initiating the injection phase, switching the first valve (20A) from the second state to the first state while the second valve (20B) is still in the second state and as a consequence causing displacement of the plunger (27) in the dosing unit (26) towards the chamber outlet (29A) and flow of lubricant from the dosing chamber (29) through the chamber outlet (29A) and the feed conduit (9) into the feed volume (17) of the injector (4) and through the nozzle aperture (5') into the cylinder (1); and subsequently switching the second valve (20B) from the second state to the first state and causing flow of lubricant from the supply conduit (12) to the pressure control port (4B) and as a consequence stopping injection of lubricant into the cylinder (1);
B) comprises firstly filling the dosing chamber (29) in an accumulation phase while the first valve (20A) and the second valve (20B) are both in the second state; secondly switching the second valve (20B) to the first state and then switching the first valve (20A) to the first state; subsequently for initiating the injection phase switching the second valve (20B) from the first state to the second state while the first valve (20A) is still in the first state and as a consequence causing a pressure drop at the pressure control port (4B) relatively to the pressure at the injector inlet port (4A) and causing displacement of the plunger (27) in the dosing unit (26) towards the chamber outlet (29A) and flow of lubricant from the dosing chamber (29) through the chamber outlet (29A) and through the feed conduit (9) and through the injector inlet port (4A) into the feed volume (17) and through the nozzle aperture (5') into the cylinder (1); and subsequently switching the first valve (20B) from the first state to the second state and causing stop of flow of lubricant to the injector inlet port (4A) and as a consequence stopping injection of lubricant into the cylinder (1).

## Patentansprüche

1. Regler (11), der zum Regeln der Menge und des Zeitpunkts der Schmiermitteleinspritzung durch mindestens eine Einspritzvorrichtung (4) konfiguriert ist, die in einem Zylinder (1) eines großen langsam laufenden Zweitaktmotors mit einem sich hin- und herbewegenden Kolben im Inneren und mit einer Vielzahl von Einspritzvorrichtungen (4) angeordnet ist; wobei der Regler (11) für eine Verbindung durch eine Speiseleitung (9) zu mindestens einer der Einspritzvorrichtungen (4) zum Zuführen von Schmiermittel von dem Regler (11) zu der Einspritzvorrichtung (4) zur Einspritzung des Schmiermittels durch die Einspritzvorrichtung (4) in den Zylinder (1) konfiguriert ist; wobei der Regler (11) eine Dosiereinheit (26) umfasst, wobei die Dosiereinheit (26) eine Dosierkammer (29) und einen Kammerauslass (29A) umfasst, der zur Verbindung mit der Speiseleitung (9) konfiguriert ist, und wobei die Dosiereinheit (26) für einen zyklischen Betrieb zwischen einer Akkumulationsphase und einer anschließenden Einspritzphase konfiguriert ist, wobei die Akkumulationsphase eine Akumulation von Schmiermittel in der Dosierkammer (29) umfasst und die anschließende Einspritzphase ein Abgeben des akkumulierten Schmiermittels aus der Dosierkammer (29) durch den Kammerauslass (29A) zu der mindestens einen Einspritzvorrichtung (4) umfasst; wobei der Regler (11) ferner einen Durchflussmesser (31) umfasst, der mit der Dosierkammer (29) verbunden ist und zum Messen der Masse und/oder des Volumens des Schmiermittels, das in der Akkumulationsphase in die Dosierkammer (29) strömt, konfiguriert ist, und wobei der Regler (11) dazu konfiguriert ist, ein entsprechendes Durchflussanzeigesignal von dem Durchflussmesser (31) bereitzustellen, wobei das Durchflussanzeigesignal ein Maß für die Einspritzmasse und/oder das Einspritzvolumen des Schmiermittels der vorangegangenen Einspritzphase ist, **dadurch gekennzeichnet, dass** der Durchflussmesser (31) eine stromaufwärtige Verbindung zu einer Schmiermittelnachfüllleitung (13') zum Nachfüllen der Dosierkammer (29) durch den Durchflussmesser (31) mit Schmiermittel aus der Schmiermittelnachfüllleitung (13') in der Akkumulationsphase umfasst, wobei die Dosierkammer (29) über eine stromabwärtige Verbindung zu einem Rückschlagventil (30) zum Verhindern eines Rückflusses durch den Durchflussmesser (31) verfügt.

2. Großer langsam laufender Zweitaktmotor, der einen Zylinder (1) mit einem sich hin- und herbewegenden Kolben im Inneren und mit einer Vielzahl von Einspritzvorrichtungen (4) umfasst, die entlang eines Umfangs des Zylinders (1) zur Einspritzung von Schmiermittel in den Zylinder (1) an verschiedenen Positionen am Umfang verteilt sind; wobei der Motor ferner einen Regler (11) umfasst, der zum Regeln der Menge und des Zeitpunkts der Schmiermitteleinspritzung durch mindestens eine der Einspritzvorrichtungen (4) konfiguriert ist; wobei der Regler (11) durch eine Speiseleitung (9) mit mindestens einer der Einspritzvorrichtungen (4) zum Zuführen von Schmiermittel zur Einspritzung in den Zylinder (1) verbunden ist; **dadurch gekennzeichnet, dass** der Regler (11) ein Regler nach Anspruch 1 ist.

3. Großer langsam laufender Zweitaktmotor nach Anspruch 2, wobei der Durchflussmesser (31) zwischen der Schmiermittelnachfüllleitung (13') und der Speiseleitung (9) für einen Strom von Schmiermittel aus der Nachfüllleitung (13') durch den Durchflussmesser (31) und durch die Speiseleitung (9) in die Dosierkammer (29) in der Akkumulationsphase angeordnet ist.

4. Großer langsam laufender Zweitaktmotor nach Anspruch 3, wobei zwischen dem Durchflussmesser (31) und der Speiseleitung (9) ein Rückschlagventil (30) zum Verhindern eines Rückflusses von Schmiermittel aus der Speiseleitung (9) in den Durchflussmesser (31) angeordnet ist.

5. Großer langsam laufender Zweitaktmotor nach einem der vorhergehenden Ansprüche 2-4, wobei die Dosiereinheit (26) einen Dosiereinlass (26A) und einen Stößel (27) zwischen dem Dosiereinlass (26A) und dem Kammerauslass (29A) umfasst, wobei der Stößel (27) für eine Verlagerung in Richtung des Kammerauslasses (29A) bei Druck von Schmiermittel, das in den Dosiereinlass (26A) strömt, angeordnet ist, wobei die Verlagerung eine Verringerung des Volumens in der Dosierkammer (29) und entsprechend ein Ausstoßen von Schmiermittel aus der Dosierkammer (29) durch den Kammerauslass (29A) in die Speiseleitung (9) bewirkt.

6. Großer langsam laufender Zweitaktmotor nach Anspruch 5, wobei der Regler (11) ein erstes Ventil (20A) mit einer Ansaugöffnung (12A), die mit einer Schmiermittelzuführleitung (12) verbunden ist, und einer Auslassöffnung (24A), die mit dem Dosiereinlass (26A) verbunden ist, umfasst, wobei das erste Ventil (20A) zum Umschalten zwischen einem ersten Zustand in der Einspritzphase, in dem die Ansaugöffnung (12A) und die Auslassöffnung (24A) zum Speisen von Schmiermittel aus der Zuführleitung (12) durch die Ansaugöffnung (12A) und durch die Auslassöffnung (24A) zu dem Dosiereinlass (26A) verbunden sind, wenn sich das erste Ventil (20A) in dem ersten Zustand zum Zuführen des Schmiermittels aus der Zuführleitung (12) zu der Dosiereinheit (26) befindet, und einem zweiten Zustand in der Akkumulationsphase, in dem die Einlassöffnung (21A) und die Auslassöffnung (24A) zum Verhindern, dass Schmiermittel aus der Zuführleitung (12) den Dosiereinlass (26A) erreicht, nicht verbunden sind, wenn sich das erste Ventil (20A) im zweiten Zustand befindet, konfiguriert ist.

7. Großer langsam laufender Zweitaktmotor nach Anspruch 6, wobei das erste Ventil (20A) auch eine Rückführöffnung (13A) umfasst, die mit einer Schmiermittelrückführleitung (13) verbunden ist, wobei das erste Ventil (20A) zum Verbinden der Auslassöffnung (24A) mit der Rückführöffnung (13A) im zweiten Zustand zum Ablassen von Schmiermittel aus dem Dosiereinlass (26A) in die Rückführleitung (13), wenn der Drücker (27) in der Akkumulationsphase in Richtung des Dosiereinlasses (26A) verlagert wird, konfiguriert ist.

8. Großer langsam laufender Zweitaktmotor nach Anspruch 6 oder 7, wobei die Schmiermittelnachfüllleitung (13') mit der Rückführleitung (13) zum Aufnehmen von Schmiermittel aus der Rückführleitung (13) zum Nachfüllen der Dosierkammer (29) in der Akkumulationsphase verbunden ist, wobei der Druck des Schmiermittels in der Rückführleitung (13) geringer ist als der Druck des Schmiermittels in der Zuführleitung (12).

9. Großer langsam laufender Zweitaktmotor nach einem der vorhergehenden Ansprüche 2-8, wobei die Einspritzvorrichtung (4) eine Einspritzvorrichtungseinlassöffnung (4A) in Verbindung mit der Speiseleitung (9) und eine Druckregelöffnung (4B) in Verbindung mit einer Druckregelleitung (10) umfasst; wobei die Einspritzvorrichtung (4) ein Speisevolumen (17) in Verbindung mit der Einspritzvorrichtungseinlassöffnung (4A) zum Aufnehmen von Schmiermittel aus der Speiseleitung (9) umfasst; wobei die Einspritzvorrichtung eine Düse (5) mit einem Düsendurchlass (5') in Verbindung mit dem Speisevolumen (17) umfasst, wobei der Düsendurchlass (5') innerhalb des Zylinders (1) zur Einspritzung von Schmiermittel in den Zylinder (1) aus dem Speisevolumen (17) durch den Düsendurchlass (5') angeordnet ist; wobei die Einspritzvorrichtung (4) einen sich hin- und herbewegenden Ventilkörper (15) umfasst, wobei eine erste Seite mit dem Speisevolumen (17) in Verbindung steht und eine gegenüberliegende Seite mit der Druckregelöffnung (4B) zum Regeln der Position des Ventilkörpers (15) in Abhängigkeit von einer Druckdifferenz zwischen der Einspritzvorrichtungseinlassöffnung (4A) und der Druckregelöffnung (4B) in Verbindung steht; wobei der Ventilkörper (15) zum Umschalten zwischen einem Öffnen und Schließen des Düsendurchlasses (5') durch Druckänderungen zwischen der Einspritzvorrichtungseinlassöffnung (4A) und der Druckregelöffnung (4B) angeordnet ist

10. Verfahren zum Schmieren eines großen langsam laufenden Zweitaktmotors, der einen Zylinder (1) mit einem sich hin- und herbewegenden Kolben im Inneren und mit einer Vielzahl von Einspritzvorrichtungen (4) umfasst, die entlang eines Umfangs des Zylinders (1) zur Einspritzung von Schmiermittel in den Zylinder (1) an verschiedenen Positionen am Umfang verteilt sind; wobei der Motor ferner einen Regler (11) umfasst, der zum Regeln der Menge und des Zeitpunkts der Schmiermitteleinspritzung durch mindestens eine der Einspritzvorrichtungen (4) konfiguriert ist; wobei der Regler (11) durch eine Speiseleitung (9) mit mindestens einer der Einspritzvorrichtungen (4) zum Zuführen von Schmiermittel zur Einspritzung in den Zylinder (1) verbunden ist; wobei der Regler (11) eine Dosiereinheit (26) umfasst, wobei die Dosiereinheit (26) eine Dosierkammer (29) und einen Kammerauslass (29A) umfasst, der die Dosierkammer (29) mit der Speiseleitung (9) verbindet; wobei der Regler (11) ferner einen Durchflussmesser (31) umfasst, der mit der Dosierkammer (29) verbunden ist und zum Messen der Masse und/oder des Volumens des Schmiermittels, das in die Dosierkammer (29) strömt, konfiguriert ist; und wobei das Verfahren Betreiben der Dosiereinheit (26) in einem zyklischen Betrieb zwischen einer Einspritzphase und einer anschließenden Akkumulationsphase; in der Einspritzphase Abgeben des Schmiermittels aus der Dosierkammer (29) durch den Kammerauslass (29A) und durch die Speiseleitung (9) zu der mindestens einen der Einspritzvorrichtungen (4) und Einspritzen des Schmiermittels aus der mindestens einen der Einspritzvorrichtungen (4) in den Zylinder (1); in der anschließenden Akkumulationsphase Nachfüllen von Schmiermittel in die Dosierkammer (29) und Messen der Masse und/oder des Volumens des Schmiermittels, das zum Nachfüllen in die Dosierkammer (29) strömt, durch den Durchflussmesser (31) umfasst; wobei das Verfahren ferner Bereitstellen eines entsprechenden elektronischen Durchflussanzeigesignals durch den Durchflussmesser (31) als Maß für die Einspritzmasse und/oder das Einspritzvolumen des Schmiermittels der vorangegangenen Einspritzphase umfasst, **dadurch gekennzeichnet, dass** die Dosierkammer (29) mit einer Schmiermittelnachfüllleitung (13') zum Nachfüllen der Dosierkammer (29) mit Schmiermittel aus der Schmiermittelnachfüllleitung (13') in der Akkumulationsphase verbunden ist, wobei der Durchflussmesser (31) zwischen der Nachfüllleitung (13') und der Dosierkammer (29) angeordnet ist; und das Verfahren Messen der Masse und/oder des Volumens des Schmiermittels, das in der Akkumulationsphase aus der Nachfüllleitung (13') durch den Durchflussmesser (31) und in die Dosierkammer (29) strömt, durch den Durchflussmesser (31) umfasst.

11. Verfahren nach Anspruch 10, wobei die Dosiereinheit (26) einen Dosiereinlass (26A) und einen Drücker (27) zwischen dem Dosiereinlass (26A) und dem Kammerauslass (29A) umfasst; wobei das Verfahren Verlagern des Drückers (27) in Richtung des Kammerauslasses (29A) durch Bereitstellen von Druck durch Schmiermittel, das in den Dosiereinlass (26A) strömt, und Bewirken einer Verringerung des Volumens der Dosierkammer (29) durch die Verlagerung des Drückers (27) und entsprechendes Ausstoßen von Schmiermittel aus der Dosierkammer (29) durch den Kammerauslass (29A) in die Speiseleitung (9) und in die Einspritzvorrichtung (4) umfasst, wobei die Einspritzvorrichtung (4) eine Einspritzvorrichtungseinlassöffnung (4A) in Verbindung mit der Speiseleitung (9) und eine Druckregelöffnung (4B) in Verbindung mit einer Druckregelleitung (10) umfasst; wobei die Einspritzvorrichtung (4) ein Speisevolumen (17) in Verbindung mit der Einspritzvorrichtungseinlassöffnung (4A) zum Aufnehmen von Schmiermittel aus der Speiseleitung (9) umfasst; wobei die Einspritzvorrichtung eine Düse (5) mit einem Düsendurchlass (5') in Verbindung mit dem Speisevolumen (17) umfasst, wobei der Düsendurchlass (5') innerhalb des Zylinders (1) zur Einspritzung von Schmiermittel in den Zylinder (1) aus dem Speisevolumen (17) durch den Düsendurchlass (5') angeordnet ist; wobei die Einspritzvorrichtung (4) einen sich hin- und herbewegenden Ventilkörper (15) umfasst, wobei eine erste Seite mit dem Speisevolumen (17) in Verbindung steht und eine gegenüberliegende Seite mit der Druckregelöffnung (4B) zum Regeln der Position des Ventilkörpers (15) in Abhängigkeit von der Druckdifferenz zwischen der Einspritzvorrichtungseinlassöffnung (4A) und der Druckregelöffnung (4B) in Verbindung steht; wobei der Ventilkörper (15) zum Umschalten zwischen einem Öffnen und Schließen des Düsendurchlasses (5') angeordnet ist; und wobei das Verfahren zyklisches Ändern der Druckdifferenz zwischen der Einspritzvorrichtungseinlassöffnung (4A) und der Druckregelöffnung (4B) und dadurch Bewirken eines Umschaltens des Ventilkörpers (15) zwischen einem Einspritzzustand, in dem Schmiermittel in den Zylinder (1) eingespritzt wird, und einem geschlossenen Zustand, in dem kein Schmiermittel eingespritzt wird, umfasst.

12. Verfahren nach Anspruch 11, wobei der Regler (11) ein erstes Ventil (20A) mit einer Ansaugöffnung (12A), die mit einer Schmiermittelzuführleitung (12) verbunden ist, und einer Auslassöffnung (24A), die mit dem Dosiereinlass (26A) verbunden ist, und einer Rückführöffnung (13A), die mit einer Schmiermittelrückführleitung (13) verbunden ist, umfasst; wobei das erste Ventil (20A) dazu konfiguriert ist, zwischen einem ersten Zustand, in dem die Ansaugöffnung (12A) und die Auslassöffnung (24A) zum Speisen von Schmiermittel aus der Zuführleitung (12) durch die Ansaugöffnung (12A) und durch die Auslassöffnung (24A) zu dem Dosiereinlass (26A) miteinander verbunden sind, und einem zweiten Zustand, in dem die Ansaugöffnung (12A) und die Auslassöffnung (24A) voneinander getrennt sind und die Auslassöffnung (24A) und die Rückführöffnung (13A) zum Ablassen von Schmiermittel aus dem Dosiereinlass (26A) durch das erste Ventil (20A) in die Rückführleitung (13) miteinander verbunden sind; wobei der Regler (11) ein zweites Ventil (20B) mit einer Ansaugöffnung (12B), die mit der Zuführleitung (9) verbunden ist, und einer Auslassöffnung (24B), die mit der Druckregelleitung (10) verbunden ist, und einer Rückführöffnung (13B), die mit der Rückführleitung (13) verbunden ist, umfasst; wobei das zweite Ventil (20B) dazu konfiguriert ist, zwischen einem ersten Zustand, in dem die Ansaugöffnung (12B) und die Auslassöffnung (24B) zum Speisen von Schmiermittel aus der Zuführleitung (12) zu der Druckregelöffnung (4B) miteinander verbunden sind, und einem zweiten Zustand, in dem die Auslassöffnung (24B) und die Rückführöffnung (13B) zum Ablassen von Schmiermittel aus der Druckregelöffnung (4B) in die Rückführleitung (13) miteinander verbunden sind, umzuschalten; wobei das Verfahren eine zyklische Durchführung von entweder A) oder B) umfasst, wobei
A) zuerst Füllen der Dosierkammer (29) in einer Akkumulationsphase, während sich sowohl das erste Ventil (20A) als auch das zweite Ventil (20B) in dem zweiten Zustand befinden; und anschließend zum Einleiten der Einspritzphase Schalten des ersten Ventils (20A) aus dem zweiten Zustand in den ersten Zustand, während sich das zweite Ventil (20B) noch in dem zweiten Zustand befindet, und als Folge Bewirken einer Verlagerung des Drückers (27) in der Dosiereinheit (26) in Richtung des Kammerauslasses (29A) und eines Stroms von Schmiermittel aus der Dosierkammer (29) durch den Kammerauslass (29A) und die Speiseleitung (9) in das Speisevolumen (17) der Einspritzvorrichtung (4) und durch den Düsendurchlass (5') in den Zylinder (1); und anschließend Schalten des zweiten Ventils (20B) aus dem zweiten Zustand in den ersten Zustand und Bewirken eines Stroms von Schmiermittel von der Zuführleitung (12) zu der Druckregelöffnung (4B) und als Folge Stoppen der Einspritzung von Schmiermittel in den Zylinder (1) umfasst;
B) zuerst Füllen der Dosierkammer (29) in einer Akkumulationsphase, während sich sowohl das erste Ventil (20A) als auch das zweite Ventil (20B) im zweiten Zustand befinden; zweitens Schalten des zweiten Ventils (20B) in den ersten Zustand und dann Schalten des ersten Ventils (20A) in den ersten Zustand; anschließend zum Einleiten der Einspritzphase Schalten des zweiten Ventils (20B) aus dem ersten Zustand in den zweiten Zustand, während sich das erste Ventil (20A) noch in dem ersten Zustand befindet, und als Folge Bewirken eines Druckabfalls an der Druckregelöffnung (4B) in Bezug auf den Druck an der Einspritzvorrichtungseinlassöffnung (4A) und Bewirken einer Verlagerung des Drückers (27) in der Dosiereinheit (26) in Richtung des Kammerauslasses (29A) und einen Strom von Schmiermittel aus der Dosierkammer (29) durch den Kammerauslass (29A) und durch die Speiseleitung (9) und durch die Einspritzvorrichtungseinlassöffnung (4A) in das Speisevolumen (17) und durch den Düsendurchlass (5') in den Zylinder (1); und anschließend Schalten des ersten Ventils (20B) aus dem ersten Zustand in den zweiten Zustand und Bewirken eines Stopps des Stroms von Schmiermittel zu der Einspritzvorrichtungseinlassöffnung (4A) und als Folge Stoppen der Einspritzung von Schmiermittel in den Zylinder (1) umfasst.

## Revendications

1. Dispositif de commande (11) qui est configuré pour commander la quantité et la synchronisation de l'injection de lubrifiant par au moins un injecteur (4) qui est agencé dans un cylindre (1) d'un gros moteur à deux temps lent avec un piston réciproque à l'intérieur et avec une pluralité d'injecteurs (4) ; le dispositif de commande (11) étant configuré pour être relié par un conduit d'alimentation (9) à au moins un des injecteurs (4) pour fournir du lubrifiant depuis le dispositif de commande (11) à l'injecteur (4) pour l'injection du lubrifiant par l'injecteur (4) dans le cylindre (1) ; dans lequel le dispositif de commande (11) comprend une unité de dosage (26), l'unité de dosage (26) comprenant une chambre de dosage (29) et une sortie de chambre (29A) configurée pour être reliée au conduit d'alimentation (9), et dans lequel l'unité de dosage (26) est configurée pour un fonctionnement cyclique entre une phase d'accumulation et une phase d'injection ultérieure, dans lequel la phase d'accumulation comprend l'accumulation de lubrifiant dans la chambre de dosage (29), et la phase d'injection ultérieure comprend la distribution du lubrifiant accumulé depuis la chambre de dosage (29) à travers la sortie de chambre (29A) à l'au moins un des injecteurs (4) ; le dispositif de commande (11) comprenant en outre un débitmètre (31) relié à la chambre de dosage (29) et configuré pour mesurer la masse et/ou le volume du lubrifiant s'écoulant dans la chambre de dosage (29) dans la phase d'accumulation, et dans lequel le dispositif de commande (11) est configuré pour fournir un signal d'indication de débit correspondant à partir du débitmètre (31), le signal d'indication de débit étant une mesure de la masse et/ou du volume de lubrifiant injectés dans la phase d'injection précédente, **caractérisé en ce que** le débitmètre (31) comprend un raccordement en amont à un conduit de remplissage de lubrifiant (13') pour remplir la chambre de dosage (29) à travers le débitmètre (31) avec du lubrifiant provenant du conduit de remplissage de lubrifiant (13') dans la phase d'accumulation, dans lequel la chambre de dosage (29) est reliée en aval à un clapet anti-retour (30) pour empêcher un écoulement en sens inverse à travers le débitmètre (31).

2. Gros moteur à deux temps lent comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à divers endroits sur le périmètre ; le moteur comprenant en outre un dispositif de commande (11) qui est configuré pour commander la quantité et la synchronisation de l'injection de lubrifiant par au moins l'un des injecteurs (4) ; le dispositif de commande (11) étant relié par un conduit d'alimentation (9) à au moins un des injecteurs (4) pour fournir du lubrifiant à injecter dans le cylindre (1) ; **caractérisé en ce que** le dispositif de commande (11) est un dispositif de commande selon la revendication 1.

3. Gros moteur à deux temps lent selon la revendication 2, dans lequel le débitmètre (31) est interposé entre le conduit de remplissage de lubrifiant (13') et le conduit d'alimentation (9) pour l'écoulement de lubrifiant depuis le conduit de remplissage (13') à travers le débitmètre (31) et à travers le conduit d'alimentation (9) dans la chambre de dosage (29) dans la phase d'accumulation.

4. Gros moteur à deux temps lent selon la revendication 3, dans lequel un clapet anti-retour (30) est interposé entre le débitmètre (31) et le conduit d'alimentation (9) pour empêcher le reflux de lubrifiant depuis le conduit d'alimentation (9) dans le débitmètre (31).

5. Gros moteur à deux temps lent selon une quelconque revendication précédente 2 à 4, dans lequel l'unité de dosage (26) comprend une entrée de dosage (26A) et un plongeur (27) entre l'entrée de dosage (26A) et la sortie de chambre (29A), le plongeur (27) étant agencé pour se déplacer vers la sortie de chambre (29A) suite à une pression de lubrifiant s'écoulant dans l'entrée de dosage (26A), le déplacement provoquant une réduction du volume dans la chambre de dosage (29) et une expulsion correspondante de lubrifiant hors de la chambre de dosage (29) à travers la sortie de chambre (29A) dans le conduit d'alimentation (9).

6. Gros moteur à deux temps lent selon la revendication 5, dans lequel le dispositif de commande (11) comprend une première soupape (20A) avec un orifice d'admission (12A) relié à un conduit d'alimentation en lubrifiant (12) et un orifice de sortie (24A) relié à l'entrée de dosage (26A), la première soupape (20A) étant configurée pour basculer entre un premier état dans la phase d'injection dans lequel l'orifice d'admission (12A) et l'orifice de sortie (24A) sont reliés pour une alimentation en lubrifiant depuis le conduit d'alimentation (12) à travers l'orifice d'admission (12A) et à travers l'orifice de sortie (24A) jusqu'à l'entrée de dosage (26A) lorsque la première soupape (20A) est dans le premier état pour fournir le lubrifiant depuis le conduit d'alimentation (12) à l'unité de dosage (26), et un second état dans la phase d'accumulation dans lequel l'orifice d'entrée (21A) et l'orifice de sortie (24A) sont déconnectés pour empêcher le lubrifiant provenant du conduit d'alimentation (12) d'atteindre l'entrée de dosage (26A) lorsque la première soupape (20A) est dans le second état.

7. Gros moteur à deux temps lent selon la revendication 6, dans lequel la première soupape (20A) comprend également un orifice de retour (13A) relié à un conduit de retour de lubrifiant (13), dans lequel la première soupape (20A) est configurée pour connecter l'orifice de sortie (24A) avec l'orifice de retour (13A) dans le second état pour drainer le lubrifiant de l'entrée de dosage (26A) dans le conduit de retour (13) lorsque le plongeur (27) est déplacé vers l'entrée de dosage (26A) dans la phase d'accumulation.

8. Gros moteur à deux temps lent selon la revendication 6 ou 7, dans lequel le conduit de remplissage de lubrifiant (13') est relié au conduit de retour (13) pour recevoir le lubrifiant provenant du conduit de retour (13) pour remplir à nouveau la chambre de dosage (29) dans la phase d'accumulation, dans lequel la pression du lubrifiant dans le conduit de retour (13) est inférieure à la pression du lubrifiant dans le conduit d'alimentation (12).

9. Gros moteur à deux temps lent selon une quelconque revendication précédente 2 à 8, dans lequel l'injecteur (4) comprend un orifice d'entrée d'injecteur (4A) en communication avec le conduit d'alimentation (9) et un orifice de commande de pression (4B) en communication avec un conduit de commande de pression (10) ; dans lequel l'injecteur (4) comprend un volume d'alimentation (17) en communication avec l'orifice d'entrée d'injecteur (4A) pour recevoir du lubrifiant provenant du conduit d'alimentation (9) ; dans lequel l'injecteur comprend une buse (5) avec une ouverture de buse (5') en communication avec le volume d'alimentation (17), l'ouverture de buse (5') étant agencée à l'intérieur du cylindre (1) pour l'injection de lubrifiant dans le cylindre (1) depuis le volume d'alimentation (17) à travers l'ouverture de buse (5') ; dans lequel l'injecteur (4) comprend un corps de soupape réciproque (15) avec un premier côté communiquant avec le volume d'alimentation (17) et un côté opposé communiquant avec l'orifice de commande de pression (4B) pour commander la position du corps de soupape (15) en fonction d'une différence de pression entre l'orifice d'entrée d'injecteur (4A) et l'orifice de commande de pression (4B) ; le corps de soupape (15) étant agencé pour basculer entre l'ouverture et la fermeture de l'ouverture de buse (5') par des changements de pression entre l'orifice d'entrée d'injecteur (4A) et l'orifice de commande de pression (4B).

10. Procédé de lubrification d'un gros moteur à deux temps lent comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à divers endroits sur le périmètre ; le moteur comprenant en outre un dispositif de commande (11) qui est configuré pour commander la quantité et la synchronisation de l'injection de lubrifiant par au moins l'un des injecteurs (4) ; le dispositif de commande (11) étant relié par un conduit d'alimentation (9) à au moins un des injecteurs (4) pour fournir du lubrifiant à injecter dans le cylindre (1) ; dans lequel le dispositif de commande (11) comprend une unité de dosage (26), l'unité de dosage (26) comprenant une chambre de dosage (29) et une sortie de chambre (29A) reliant la chambre de dosage (29) au conduit d'alimentation (9) ; le dispositif de commande (11) comprenant en outre un débitmètre (31) relié à la chambre de dosage (29) et configuré pour mesurer la masse et/ou le volume du lubrifiant s'écoulant dans la chambre de dosage (29) ; et dans lequel le procédé comprend le fonctionnement de l'unité de dosage (26) dans un fonctionnement cyclique entre une phase d'injection et une phase d'accumulation ultérieure ; dans la phase d'injection, la distribution du lubrifiant depuis la chambre de dosage (29) à travers la sortie de chambre (29A) et à travers le conduit d'alimentation (9) vers au moins un des injecteurs (4) et l'injection du lubrifiant depuis l'au moins un parmi les injecteurs (4) dans le cylindre (1) ; dans la phase d'accumulation ultérieure, le remplissage de lubrifiant dans la chambre de dosage (29) et, par le débitmètre (31), la mesure de la masse et/ou du volume du lubrifiant s'écoulant dans la chambre de dosage (29) pour le remplissage ; dans lequel le procédé comprend en outre la fourniture d'un signal d'indication de débit électronique correspondant par le débitmètre (31) en tant que mesure de la masse et/ou du volume de lubrifiant injectés de la phase d'injection précédente, **caractérisé en ce que** la chambre de dosage (29) est reliée à un conduit de remplissage de lubrifiant (13') pour remplir la chambre de dosage (29) avec du lubrifiant depuis le conduit de remplissage de lubrifiant (13') dans la phase d'accumulation, dans lequel le débitmètre (31) est interposé entre le conduit de remplissage (13') et la chambre de dosage (29) ; et le procédé comprend, par le débitmètre (31), la mesure de la masse et/ou du volume du lubrifiant s'écoulant du conduit de remplissage (13') à travers le débitmètre (31) et dans la chambre de dosage (29) dans la phase d'accumulation.

11. Procédé selon la revendication 10, dans lequel l'unité de dosage (26) comprend une entrée de dosage (26A) et un plongeur (27) entre l'entrée de dosage (26A) et la sortie de chambre (29A) ; dans lequel le procédé comprend le déplacement du plongeur (27) vers la sortie de chambre (29A) en fournissant une pression provenant du lubrifiant s'écoulant dans l'entrée de dosage (26A) et provoquant une réduction du volume de la chambre de dosage (29) par le déplacement du plongeur (27) et l'expulsion correspondante du lubrifiant hors de la chambre de dosage (29) à travers la sortie de chambre (29A) dans le conduit d'alimentation (9) et dans l'injecteur (4), dans lequel l'injecteur (4) comprend un orifice d'entrée d'injecteur (4A) en communication avec le conduit d'alimentation (9) et un orifice de commande de pression (4B) en communication avec un conduit de commande de pression (10) ; dans lequel l'injecteur (4) comprend un volume d'alimentation (17) en communication avec l'orifice d'entrée d'injecteur (4A) pour recevoir du lubrifiant provenant du conduit d'alimentation (9) ; dans lequel l'injecteur comprend une buse (5) avec une ouverture de buse (5') en communication avec le volume d'alimentation (17), l'ouverture de buse (5') étant agencée à l'intérieur du cylindre (1) pour l'injection de lubrifiant dans le cylindre (1) depuis le volume d'alimentation (17) à travers l'ouverture de buse (5') ; dans lequel l'injecteur (4) comprend un corps de soupape réciproque (15) avec un premier côté communiquant avec le volume d'alimentation (17) et un côté opposé communiquant avec l'orifice de commande de pression (4B) pour commander la position du corps de soupape (15) en fonction de la différence de pression entre l'orifice d'entrée d'injecteur (4A) et l'orifice de commande de pression (4B) ; le corps de soupape (15) étant agencé pour basculer entre l'ouverture et la fermeture de l'ouverture de buse (5') ; et le procédé comprenant le changement cyclique de la différence de pression entre l'orifice d'entrée d'injecteur (4A) et l'orifice de commande de pression (4B) et provoquant ainsi le basculement du corps de soupape (15) entre un état d'injection où le lubrifiant est injecté dans le cylindre (1) et un état de fermeture où aucun lubrifiant n'est injecté.

12. Procédé selon la revendication 11, dans lequel le dispositif de commande (11) comprend une première soupape (20A) avec un orifice d'admission (12A) relié à un conduit d'alimentation en lubrifiant (12) et un orifice de sortie (24A) relié à l'entrée de dosage (26A) et un orifice de retour (13A) relié à un conduit de retour de lubrifiant (13) ; la première soupape (20A) étant configurée pour basculer entre un premier état dans lequel l'orifice d'admission (12A) et l'orifice de sortie (24A) sont interconnectés pour une alimentation en lubrifiant depuis le conduit d'alimentation (12) à travers l'orifice d'admission (12A) et à travers l'orifice de sortie (24A) à l'entrée de dosage (26A) et un second état dans lequel l'orifice d'admission (12A) et l'orifice de sortie (24A) sont déconnectés l'un de l'autre et l'orifice de sortie (24A) et l'orifice de retour (13A) sont interconnectés pour drainer du lubrifiant de l'entrée de dosage (26A) à travers la première soupape (20A) dans le conduit de retour (13) ; dans lequel le dispositif de commande (11) comprend une seconde soupape (20B) avec un orifice d'admission (12B) relié au conduit d'alimentation (9) et un orifice de sortie (24B) relié au conduit de commande de pression (10) et un orifice de retour (13B) relié au conduit de retour (13) ; la seconde soupape (20B) étant configurée pour basculer entre un premier état dans lequel l'orifice d'admission (12B) et l'orifice de sortie (24B) sont interconnectés pour une alimentation en lubrifiant depuis le conduit d'alimentation (12) à l'orifice de commande de pression (4B) et un second état dans lequel l'orifice de sortie (24B) et l'orifice de retour (13B) sont interconnectés pour drainer du lubrifiant hors de l'orifice de commande de pression (4B) vers le conduit de retour (13) ; dans lequel le procédé comprend l'exécution cyclique de A) ou B), dans lequel
A) comprend tout d'abord le remplissage de la chambre de dosage (29) dans une phase d'accumulation alors que la première soupape (20A) et la seconde soupape (20B) sont toutes deux dans le second état ; et ensuite pour amorcer la phase d'injection, le passage de la première soupape (20A) du second état au premier état alors que la seconde soupape (20B) est encore dans le second état et en conséquence le fait de provoquer le déplacement du plongeur (27) dans le unité de dosage (26) vers la sortie de chambre (29A) et l'écoulement de lubrifiant depuis la chambre de dosage (29) à travers la sortie de chambre (29A) et le conduit d'alimentation (9) dans le volume d'alimentation (17) de l'injecteur (4) et à travers l'ouverture de buse (5') dans le cylindre (1) ; et ensuite la commutation de la seconde soupape (20B) du second état au premier état et le fait de provoquer l'écoulement de lubrifiant du conduit d'alimentation (12) vers l'orifice de commande de pression (4B) et en conséquence l'arrêt de l'injection de lubrifiant dans le cylindre (1) ;
B) comprend tout d'abord le remplissage de la chambre de dosage (29) dans une phase d'accumulation alors que la première soupape (20A) et la seconde soupape (20B) sont toutes deux dans le second état ; deuxièmement la commutation de la seconde soupape (20B) dans le premier état puis la commutation de la première soupape (20A) dans le premier état ; ensuite pour amorcer la phase d'injection, la commutation de la seconde soupape (20B) du premier état au second état alors que la première soupape (20A) est encore dans le premier état et en conséquence le fait de provoquer une chute de pression au niveau de l'orifice de contrôle de pression (4B) par rapport à la pression au niveau de l'orifice d'entrée d'injecteur (4A) et le fait de provoquer le déplacement du plongeur (27) dans l'unité de dosage (26) vers la sortie de chambre (29A) et l'écoulement de lubrifiant de la chambre de dosage (29) à travers la sortie de la chambre (29A) et à travers le conduit d'alimentation (9) et à travers l'orifice d'entrée d'injecteur (4A) dans le volume d'alimentation (17) et à travers l'ouverture de buse (5') dans le cylindre (1) ; et ensuite la commutation de la première soupape (20B) du premier état au second état et le fait de provoquer l'arrêt de l'écoulement de lubrifiant vers l'orifice d'entrée d'injecteur (4A) et en conséquence l'arrêt de l'injection de lubrifiant dans le cylindre (1).
